# EUROPÄISCHE PATENTANMELDUNG

(11) **EP 2 030 893 A1**
(43) Veröffentlichungstag der Anmeldung: **04.03.2009**
(21) Anmeldenummer: 08014296.1
(22) Anmeldetag: 11.08.2008
(51) Int. Cl.: B65B 1/08, B65B 1/30, G01F 1/64

(54) **Vorrichtung und Verfahren zur mengengesteuerten Abfüllung pulverförmiger Substanzen in Behältnisse**

(30) Priorität: 31.08.2007 EP 07017104
(71) Anmelder: Uhlmann Visio Tec GmbH, 88471 Laupheim (DE); Harro Höfliger Verpackungsmaschinen GmbH, 71573 Allmersbach im Tal (DE)
(72) Erfinder: Mertens, Richard, 88471 Laupheim (DE); Prinz, Heino, 88471 Laupheim (DE); Seyfang, Karlheinz, 71554 Weissach im Tal (DE)
(74) Vertreter: Wächter, Jochen

(57) **Zusammenfassung**

Die Vorrichtung zur mengengesteuerten Abfüllung einer pulverförmigen Substanz (4) umfasst einen Vorratsbehälter (2) mit einer schmalen Austrittsöffnung (6) zur vorübergehenden Aufnahme der pulverförmigen Substanz (4) und zur Abgabe einer vorbestimmten Menge der pulverförmigen Substanz (4) an mindestens ein unterhalb des Vorratsbehälters (2) angeordnetes Behältnis (7), einen mit dem Vorratsbehälter (2) verbundenen Vibrationserzeuger (8) zum Bewirken der Abgabe der pulverförmigen Substanz (4), einen Sensor (12) zur Bestimmung der vom Vorratsbehälter (2) an das Behältnis (7) abgegebenen Menge der pulverförmigen Substanz (4), und eine Steuereinrichtung (9), welche geeignet ist, die vom Sensor (12) ermittelten Daten in Steuerbefehle für den Vibrationserzeuger (8) umzuwandeln. Dabei ist der Sensor (12) ein kapazitiver Sensor zur quantitativen Bestimmung der Menge der während des Füllvorgangs durch ihn hindurch fallenden pulverförmigen Substanz (4), der zwischen dem Vorratsbehälter (2) und dem Behältnis (7) angeordnet ist.

## Beschreibung

Die Erfindung betrifft eine Vorrichtung und ein Verfahren zur mengengesteuerten Abfüllung pulverförmiger Substanzen in Behältnisse.

Bei der Herstellung pulverförmiger pharmazeutischer Produkte müssen strenge Qualitätskriterien eingehalten werden. Hierfür werden verschiedenste Untersuchungsmethoden eingesetzt, die die pulverförmigen Substanzen vor der endgültigen Abfüllung in Behältnisse, beispielsweise Blisterverpackungen, auf ihren Wirkstoffgehalt usw. prüfen.

Um Fehler auch beim abschließenden Schritt des Befüllens der Behältnisse ausschließen zu können, wurde ein Sensor zur Verifikation der Füllmenge von Blisterhöfen geschaffen, der in der EP 1 193 177 A1 beschrieben ist. Der Sensor überprüft die Füllmenge in den Blisterhöfen, woraufhin diese versiegelt werden. Ein Beispiel eines solchen Sensors ist ein kapazitiver Messsensor.

Aus der US 4,461,363 ist eine Befüllvorrichtung bekannt, bei der das Pulver zunächst dosiert in Ausnehmungen einer drehbaren Befüllungseinheit eingebracht wird, wie insbesondere aus Fig. 6 hervorgeht. Anschließend wird die Befülleinheit gedreht und das Pulver wird mittels pneumatischer Mittel nach unten in ein Behältnis ausgestoßen. Die vorbestimmte Menge an Pulver wird während des Fallens durch einen kapazitiven Messsensor auf Korrektheit überprüft.

Ebenfalls bekannt, beispielsweise aus S. Yang, J.R.G. Evans, "On the rate of descent of powder in a vibrating tube", Philosophical Magazine, Vol. 85, No. 10, 1. April 2005, 1089-1109, ist eine Abfüllvorrichtung für Pulver, bei der das Pulver in einem Glasbehälter mit einer schmalen Spitze zwischengelagert und über eine Austrittsöffnung nach unten an ein Behältnis übergeben wird. Die Austrittsöffnung ist dabei so schmal, dass das Pulver aufgrund seiner Kohäsivität nicht durch Schwerkrafteinwirkung ausfließt. Statt dessen kann der Pulverstrom über eine Vibrationsvorrichtung, die mit dem Glasbehälter verbunden ist, ein- und ausgeschaltet werden. Außerdem ist das Behältnis auf einer Wiegevorrichtung angeordnet, die das Gesamtgewicht des Behältnisses ermittelt und daraus die bereits abgefüllte Menge an Pulver ableitet. Basierend auf dieser Berechnung wird die Vibrationsvorrichtung gesteuert. Problematisch ist die lange Wiegezeit bei geringen Pulvermengen. Außerdem ist ein Einsatz im Bereich Aseptik/Sterilfertigung ausgeschlossen, da die Wiegezellen nicht inline sterilisiert werden können. Ein weiteres großes Problem liegt darin, dass bestimmte Behältnisse überhaupt nicht auf einer Wiegezelle freigestellt werden können.

Der Erfindung liegt die Aufgabe zugrunde, eine Vorrichtung zur mengengesteuerten Abfüllung pulverförmiger Substanzen zu schaffen, mit der für eine möglichst große Anzahl von Anwendungsbereichen eine schnelle quantitative Untersuchung der pulverförmigen Substanzen während des Abfüllens und eine entsprechende genaue und sichere Steuerung der Pulverabgabe möglich ist, sowie ein entsprechendes Verfahren zur mengengesteuerten Abfüllung pulverförmiger Substanzen anzugeben.

Diese Aufgabe wird durch die Merkmale des Anspruchs 1 bzw. des Anspruchs 9 gelöst.

Die erfindungsgemäße Vorrichtung zur mengengesteuerten Abfüllung einer pulverförmigen Substanz weist einen Vorratsbehälter mit einer schmalen Austrittsöffnung zur vorübergehenden Aufnahme der pulverförmigen Substanz und zur Abgabe einer vorbestimmten Menge der pulverförmigen Substanz an mindestens ein unterhalb des Vorratsbehälters angeordnetes Behältnis auf, außerdem einen mit dem Vorratsbehälter verbundenen Vibrationserzeuger zum Bewirken der Abgabe der pulverförmigen Substanz und einen Sensor zur Bestimmung der vom Vorratsbehälter an das Behältnis abgegebenen Menge der pulverförmigen Substanz, sowie eine Steuereinrichtung, welche geeignet ist, die vom Sensor ermittelten Daten in Steuerbefehle für den Vibrationserzeuger umzuwandeln. Dabei ist der Sensor ein kapazitiver Sensor zur quantitativen Bestimmung der Menge der während des Füllvorgangs durch ihn hindurch fallenden pulverförmigen Substanz, der zwischen dem Vorratsbehälter und dem Behältnis angeordnet ist.

Mit diesem Aufbau ist es möglich, die pulverförmige Substanz im Fallen in das Behältnis auf ihre Menge hin zu untersuchen, wobei sich überraschenderweise auch eine ungleichmäßige Verteilung bzw. eine örtliche Aufspaltung oder Ausweitung des Pulververbunds eines für ein Behältnis bestimmten Anteils der pulverförmigen Substanz nicht negativ auf das Messergebnis auswirkt und das Verfahren somit sehr sicher und genau ist. Außerdem kann der Abfüllvorgang und die Pulverabgabe mit dieser Anordnung extrem schnell und in einer sehr großen Vielzahl von Applikationen, gesteuert werden. Darunter fällt die Befüllung von Blisterhöfen, ringförmigen Kassetten mit mehreren Höfen für Einzeldosen, anderen Mehrfachbehältnissen und generell allen Behältnissen mit engen Füllöffnungen, auch unter sterilen Bedingungen.

Vorzugsweise weist der Sensor einen Spannungsgenerator für ein hochfrequentes elektrisches Wechselfeld, zwei sich gegenüberliegende, sich vertikal erstreckende und vom Spannungsgenerator jeweils kurzzeitig entgegengesetzt aufgeladene Kondensatorplatten und ein Strommessgerät auf. Dabei weist das elektrische Wechselfeld eine Frequenz von zwischen 500 KHz und 10 MHz, vorzugsweise 1 MHz, auf.

Die Geschwindigkeit der Abfüllung wird dadurch erhöht, dass der Sensor geeignet ist, mehr als 1.000 Messungen pro Minute durchzuführen.

Außerdem ist der Sensor geeignet, die Menge der pulverförmigen Substanz innerhalb eines Zeitfensters von weniger als 50 ms, bevorzugt weniger als 10 ms, zu ermitteln, sodass die Reaktionszeit auch für sehr geringe Pulvermengen und schnelle Befüllung geeignet ist.

In einer bevorzugten Ausführungsform weisen die Kondensatorplatten einen Abstand von zwischen 5 und 30 mm zueinander auf, der vorzugsweise mindestens 10% breiter ist als die von der pulverförmigen Substanz überstrichene Fläche.

Zur Qualitätssicherung der Abfüllung ist die Steuereinheit geeignet, die vom Sensor ermittelten Daten innerhalb eines Zeitraums von 10 ms in einen Steuerbefehl für den Vibrationserzeuger umzuwandeln.

Eine besonders bevorzugte Form der Abfüllung ohne die Notwendigkeit eines Verschlussmittels für die Austrittsöffnung wird dadurch gewährleistet, dass der Vorratsbehälter eine Kapillare aufweist, an deren Ende sich die schmale Austrittsöffnung befindet. Hierdurch ist gewährleistet, dass die pulverförmige Substanz aufgrund ihrer Kohäsivität nicht durch Schwerkrafteinwirkung ausfließt, sondern der Pulverstrom gezielt über den Vibrationserzeuger gesteuert werden kann. Die Vorrichtung ist damit auch für sehr kleine Füllmengen und eine extrem genaue Abfüllung geeignet. Außerdem ist wegen eines fehlenden mechanischen Verschlusses die Vorrichtung auch für abriebempfindliche Pulver geeignet.

Das erfindungsgemäße Verfahren zur mengengesteuerten Abfüllung einer pulverförmigen Substanz umfasst folgende Schritte:
- Bereitstellen eines Vorratsbehälters mit einer schmalen Austrittsöffnung zur vorübergehenden Aufnahme der pulverförmigen Substanz;
- Erzeugen einer Vibration des Vorratsbehälters zur Abgabe einer vorbestimmten Menge der pulverförmigen Substanz an mindestens ein unterhalb des Vorratsbehälters angeordnetes Behältnis;
- Bestimmen der vom Vorratsbehälter an das Behältnis abgegebenen Menge der pulverförmigen Substanz; und
- Steuern der Vibration des Vorratsbehälters auf der Basis des Ergebnisses des Schritts der Mengenbestimmung.

Dabei umfasst der Schritt der Mengenbestimmung den Schritt, die Menge der pulverförmigen Substanz während des Fallens vom Vorratsbehälter in das Behältnis zu bestimmen.

Vorzugsweise wird die Menge der pulverförmigen Substanz mittels eines kapazitiven Sensors zur quantitativen Bestimmung der Menge der während des Füllvorgangs durch ihn hindurch fallenden pulverförmigen Substanz bestimmt, der zwischen dem Vorratsbehälter und dem Behältnis angeordnet ist.

Für eine sichere und exakte Abfüllung der korrekten Menge der pulverförmigen Substanz findet die Bestimmung der Menge der pulverförmigen Substanz innerhalb eines Zeitfensters von weniger als 50 ms, bevorzugt weniger als 10 ms, statt.

Zur Sicherheit und einer schnellen Reaktionszeit trägt auch bei, dass die vom Sensor ermittelten Daten innerhalb eines Zeitraums von 10 ms in einen Steuerbefehl für einen Vibrationserzeuger umgewandelt werden, welcher für die Vibration des Vorratsbehälters sorgt.

Weitere Einzelheiten, Merkmale und Vorteile der vorliegenden Erfindung ergeben sich aus der nachfolgenden Beschreibung unter Bezugnahme auf die Zeichnungen.
- Fig. 1: ist eine schematische Ansicht der erfindungsgemäßen Vorrichtung zur men- gengesteuerten Abfüllung pulverförmiger Substanzen; und
- Fig. 2: ist eine schematische Darstellung des verwendeten Sensors.

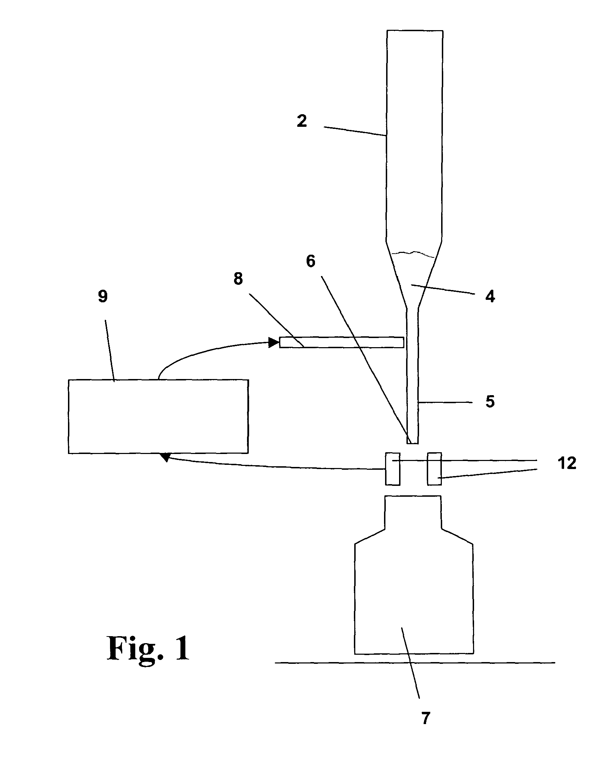

Fig. 1 ist eine schematische Ansicht eines Ausführungsbeispiels der erfindungsgemäßen Vorrichtung zur mengengesteuerten Abfüllung pulverförmiger Substanzen.

Die Vorrichtung weist einen Vorratsbehälter 2 auf, der zumindest teilweise mit einer pulverförmigen Substanz 4 gefüllt ist. Der Vorratsbehälter 2 ist vorzugsweise in einem Halter (nicht dargestellt) eingespannt, der drehbar befestigt ist. Vorzugsweise ist der Vorratsbehälter 2 aus Edelstahl ausgebildet, es sind aber auch viele andere Materialien, wie etwa Glas, Keramik oder andere Metalle, denkbar. Der Vorratsbehälter 2 weist im dargestellten Beispielsfall an seinem unteren Ende eine Kapillare 5 auf, die spitz nach unten zuläuft und eine schmale Austrittsöffnung 6 besitzt. Länge und Durchmesser der Kapillare 5 können an die pulverförmige Substanz 4 sowie an die Geometrie des zu befüllenden Behältnisses 7 angepasst sein. Der Vorratsbehälter 2 kann dabei auch zweiteilig aufgebaut sein, um den einfachen Austausch beispielsweise von unterschiedlichen Kapillaren 5 zu ermöglichen. Mit der Kapillare 5 kann man auch in enge Füllöffnungen von Behältnissen 7 eintauchen und solche Behältnisse 7 verschmutzungsfrei befüllen.

Es sind auch andere Geometrien denkbar, z.B. Röhrchen mit flachem Boden und einer schmalen Auslaufbohrung als Austrittsöffnung 6. Wichtig ist jedoch, dass allein aufgrund der Schwerkraft keine pulverförmige Substanz 4 aus der Austrittsöffnung 6 ausfließt.

Der Fluss der pulverförmigen Substanz 4 wird ausschließlich über einen Vibrationserzeuger 8 generiert, welcher mit dem Vorratsbehälter 2 verbunden ist. Der Vibrationserzeuger 8 kann auf Basis piezoelektrischer Elemente oder mittels Elektromagneten arbeiten oder als pneumatischer Vibrator ausgebildet sein. Bevorzugt ist der piezoelektrische Vibrationserzeuger 8 selbst der Halter des Vorratsbehälters 2. Der Vibrationserzeuger 8 kann über eine Grob-/Feinstromregelung angesteuert werden und bringt den Vorratsbehälter 2 vorzugsweise in Längsrichtung, d.h. in Flussrichtung der pulverförmigen Substanz 4, zum Schwingen. Auch eine Anregung quer hierzu ist möglich.

Unterhalb der Austrittsöffnung 6 des Vorratsbehälters 2 ist ein Sensor 12 angeordnet, der geeignet ist, die Menge der durch ihn hindurch tretenden pulverförmigen Substanz 4 zu ermitteln. Der Sensor 12 kann in verschiedensten Ausführungsformen und Geometrien ausgestaltet sein. Die parallele Anwendung mehrerer Sensoren 12, selbst auf engstem Raum, ist vorteilhaft, hier aber nicht dargestellt.

Der Sensor 12 misst die Menge der durch ihn hindurch fallenden pulverförmigen Substanz 4 und gibt diese Daten an eine Steuereinrichtung 9 weiter, welche die vom Sensor 12 ermittelten Daten in Steuerbefehle für den Vibrationserzeuger 8 umwandelt. So kann die Pulverabgabe direkt als Reaktion auf die bereits ins Behältnis 7 gelangte Menge der pulverförmigen Substanz 4 gesteuert werden.

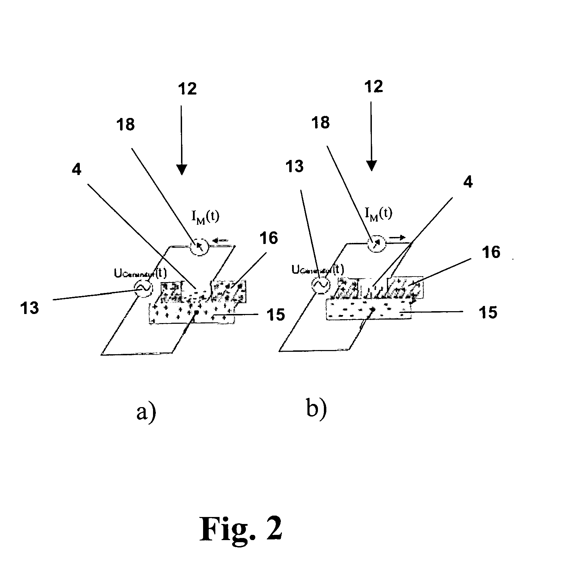

In Fig. 2 ist das Aufbauprinzip des Sensors 12 skizziert. Der Sensor 12 ist als kapazitiver Messsensor ausgebildet und umfasst zwei sich vertikal erstreckende, sich gegenüberliegende Kondensatorplatten 15, 16, zwischen denen die pulverförmige Substanz 4 hindurch fällt. Die Kondensatorplatten 15, 16 werden durch einen Spannungsgenerator 13 für hochfrequente Wechselspannung in sehr kurzen Abständen jeweils entgegengesetzt aufgeladen. Die Frequenz beträgt zwischen 500KHz und 10MHz, vorzugsweise 1 MHz. In den beiden Teilfiguren sind jeweils die Ladungszustände der Kondensatorplatten 15, 16 bei Anliegen entgegengesetzter Spannung dargestellt. Im linken Abschnitt ist die Kondensatorplatte 15 positiv aufgeladen und die Kondensatorplatte 16 negativ aufgeladen, während im rechten Abschnitt die Kondensatorplatte 16 positiv und die Kondensatorplatte 15 negativ aufgeladen ist.

Durch die Änderung der angelegten Spannung U_{Generator}(t) ergeben sich minimale Polarisationsänderungen in der an sich einen Isolator darstellenden pulverförmigen Substanz 4 im elektrischen Wechselfeld. Diese minimalen Polarisationsänderungen können durch ein Strommessgerät 18 aufgenommen werden. Der gemessene Strom I_{M}(t) ist proportional zur Anzahl der geladenen Teilchen in der pulverförmigen Substanz 4. Selbst während des Fallens und damit der extrem kurzen Zeit, während der sich die pulverförmige Substanz 4 im Bereich des Sensors 12 befindet, werden hervorragende Ergebnisse erzielt. Auch eine lose Anordnung bzw. eine örtliche Aufspaltung oder Ausweitung des Pulververbunds eines für ein Behältnis 7 bestimmten Anteils der pulverförmigen Substanz 4 wirkt sich nicht negativ auf das Messergebnis aus. Der Sensor 12 ist auch unempfindlich gegenüber Druckschwankungen und Luftströmungen, was besonders für den Einsatzbereich Aseptik/Sterilfertigung erhebliche Vorteile liefert. In diesem Fall ist weiterhin von Vorteil, dass der Sensor 12 leicht zu reinigen und zu sterilisieren ist.

Der Sensor 12 ist in der Lage, sowohl sehr kleine Mengen zu detektieren als auch über die Zeit zu integrieren, d.h. einen losen Pulverstrom, wie er hier erzeugt wird, zu erfassen. Dies ist beispielsweise besonders vorteilhaft bei Pulvern zur Inhalation, da eine Verdichtung des Pulvers, wie sie bei anderen Dosiersystemen stattfindet, Probleme bei der Anwendung hervorruft.

Die detaillierten Ausgestaltungen des Sensors 12 sind vielfältig, solange der in Fig. 2 beschriebene Grundaufbau eingehalten wird. In einem bevorzugten Beispiel weisen die Kondensatorplatten 15, 16 eine Höhe von zwischen 5 und 10 mm, vorzugsweise 6 mm, auf und besitzen einen Abstand von zwischen 5 und 30 mm zueinander, der vorzugsweise aber mindestens 10% breiter ist als die von der pulverförmigen Substanz überstrichene Fläche. In jedem Fall müssen für die jeweilige Pulversorte entsprechende Referenzmodelle aufgenommen werden, um den Sensor 12 zuvor für das betreffende Anwendungsgebiet zu eichen.

Auf diese Weise ist es möglich, die Menge einer pulverförmigen Substanz 4 quantitativ zu bestimmen und somit die Abgabe der pulverförmigen Substanz exakt und sicher zu steuern.

Die Behältnisse 7 werden üblicherweise über getaktet arbeitende Fördervorrichtungen zur Füllstation transportiert. Mit dem beschriebenen System kann mit mehreren nebeneinander angeordneten Sensoren parallel eine Abfüllsteuerung von pulverförmigen Substanzen für mehr als 1.000 Behältnisse pro Minute erfolgen, wobei die Daten der für ein Behältnis bestimmten pulverförmigen Substanz 4 vom Sensor 12 innerhalb eines Zeitfensters von weniger als 50 ms, bevorzugt weniger als 10 ms, aufgenommen werden. Da die vom Sensor 12 ermittelten Daten von der Steuereinrichtung 9 innerhalb eines Zeitraums von 10 ms in einen Steuerbefehl für den Vibrationserzeuger umgewandelt werden, liegt die Gesamtreaktionszeit des Systems bei vorzugsweise ca. 20 ms.

Es können mehrere erfindungsgemäße Vorrichtungen auf engstem Raum angeordnet und betrieben werden. In manchen Anwendungen kann eine kreisförmige Anordnung der Vorrichtungen vorteilhaft sein. Die Behältnisse können dabei eine beliebige Form annehmen, von äußerst kleinen Blisterhöfen bis hin zu großen Ampullen.

## Patentansprüche

1. Vorrichtung zur mengengesteuerten Abfüllung einer pulverförmigen Substanz (4) mit
einem Vorratsbehälter (2) mit einer schmalen Austrittsöffnung (6) zur vorübergehenden Aufnahme der pulverförmigen Substanz (4) und zur Abgabe einer vorbestimmten Menge der pulverförmigen Substanz (4) an mindestens ein unterhalb des Vorratsbehälters (2) angeordnetes Behältnis (7);
einem mit dem Vorratsbehälter (2) verbundenen Vibrationserzeuger (8) zum Bewirken der Abgabe der pulverförmigen Substanz (4);
einem Sensor (12) zur Bestimmung der vom Vorratsbehälter (2) an das Behältnis (7) abgegebenen Menge der pulverförmigen Substanz (4); und
einer Steuereinrichtung (9), welche geeignet ist, die vom Sensor (12) ermittelten Daten in Steuerbefehle für den Vibrationserzeuger (8) umzuwandeln,
**dadurch gekennzeichnet, dass**
der Sensor (12) ein kapazitiver Sensor zur quantitativen Bestimmung der Menge der während des Füllvorgangs durch ihn hindurch fallenden pulverförmigen Substanz (4) ist, der zwischen dem Vorratsbehälter (2) und dem Behältnis (7) angeordnet ist.

2. Vorrichtung nach Anspruch 1, **dadurch gekennzeichnet, dass** der Sensor (12) einen Spannungsgenerator (13) für ein hochfrequentes elektrisches Wechselfeld, zwei sich gegenüberliegende, sich vertikal erstreckende und vom Spannungsgenerator (13) jeweils kurzzeitig entgegengesetzt aufgeladene Kondensatorplatten (15, 16) und ein Strommessgerät (18) aufweist.

3. Vorrichtung nach Anspruch 2, **dadurch gekennzeichnet, dass** das elektrische Wechselfeld eine Frequenz von zwischen 500 KHz und 10 MHz, vorzugsweise 1 MHz, aufweist.

4. Vorrichtung nach einem der vorangehenden Ansprüche, **dadurch gekennzeichnet, dass** der Sensor (12) geeignet ist, mehr als 1.000 Messungen pro Minute durchzuführen.

5. Vorrichtung nach einem der vorangehenden Ansprüche, **dadurch gekennzeichnet, dass** der Sensor (12) geeignet ist, die Menge der pulverförmigen Substanz (4) innerhalb eines Zeitfensters von weniger als 50 ms, bevorzugt weniger als 10 ms, zu ermitteln.

6. Vorrichtung nach einem der vorangehenden Ansprüche, **dadurch gekennzeichnet, dass** die Kondensatorplatten (15, 16) einen Abstand von zwischen 5 und 30 mm zueinander aufweisen, der vorzugsweise mindestens 10% breiter ist als die von der pulverförmigen Substanz (4) überstrichene Fläche.

7. Vorrichtung nach einem der vorangehenden Ansprüche, **dadurch gekennzeichnet, dass** die Steuereinheit (9) geeignet ist, die vom Sensor ermittelten Daten innerhalb eines Zeitraums von 10 ms in einen Steuerbefehl für den Vibrationserzeuger (8) umzuwandeln.

8. Vorrichtung nach einem der vorangehenden Ansprüche, **dadurch gekennzeichnet, dass** der Vorratsbehälter (2) eine Kapillare (5) aufweist, an deren Ende sich die schmale Austrittsöffnung (6) befindet.

9. Verfahren zur mengengesteuerten Abfüllung einer pulverförmigen Substanz (4) mit folgenden Schritten:
Bereitstellen eines Vorratsbehälters (2) mit einer schmalen Austrittsöffnung zur vorübergehenden Aufnahme der pulverförmigen Substanz (4);
Erzeugen einer Vibration des Vorratsbehälters (2) zur Abgabe einer vorbestimmten Menge der pulverförmigen Substanz (4) an mindestens ein unterhalb des Vorratsbehälters (2) angeordnetes Behältnis (7);
Bestimmen der vom Vorratsbehälter (2) an das Behältnis (7) abgegebenen Menge der pulverförmigen Substanz (4); und
Steuern der Vibration des Vorratsbehälters (2) auf der Basis des Ergebnisses des Schritts der Mengenbestimmung;
**dadurch gekennzeichnet, dass**
der Schritt der Mengenbestimmung den Schritt umfasst, die Menge der pulverförmigen Substanz (4) während des Fallens vom Vorratsbehälter (2) in das Behältnis (7) zu bestimmen.

10. Verfahren nach Anspruch 9, **dadurch gekennzeichnet, dass** die Menge der pulverförmigen Substanz (4) mittels eines kapazitiven Sensors (12) zur quantitativen Bestimmung der Menge der während des Füllvorgangs durch ihn hindurch fallenden pulverförmigen Substanz (4) bestimmt wird, der zwischen dem Vorratsbehälter (2) und dem Behältnis (7) angeordnet ist.

11. Verfahren nach Anspruch 9 oder 10, **dadurch gekennzeichnet, dass** die Bestimmung der Menge der pulverförmigen Substanz (4) innerhalb eines Zeitfensters von weniger als 50 ms, bevorzugt weniger als 10 ms, stattfindet.

12. Verfahren nach einem der Ansprüche 9 bis 11, **dadurch gekennzeichnet, dass** die vom Sensor (12) ermittelten Daten innerhalb eines Zeitraums von 10 ms in einen Steuerbefehl für einen Vibrationserzeuger (8) umgewandelt werden, welcher für die Vibration des Vorratsbehälters (2) sorgt.
